(19) Europäisches Patentamt
European Patent Office
Office européen des brevets

(11) **EP 3 839 708 B1**

(12) **EUROPÄISCHE PATENTSCHRIFT**

(45) Veröffentlichungstag und Bekanntmachung des Hinweises auf die Patenterteilung:
**29.07.2026   Patentblatt 2026/31**

(21) Anmeldenummer: **20211573.9**

(22) Anmeldetag: **03.12.2020**

(51) Internationale Patentklassifikation (IPC):
***G06F 3/041*** *(2006.01)*

(52) Gemeinsame Patentklassifikation (CPC):
**G06F 3/0418**

(54) **VERFAHREN UND VORRICHTUNG ZUM BETRIEB EINES BERÜHRUNGSSENSORS**

METHOD AND DEVICE FOR OPERATING A TOUCH SENSOR

PROCÉDÉ ET DISPOSITIF DE FONCTIONNEMENT D'UN CAPTEUR TACTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **17.12.2019   DE 102019219803**

(43) Veröffentlichungstag der Anmeldung:
**23.06.2021   Patentblatt 2021/25**

(73) Patentinhaber: **BSH Hausgeräte GmbH**
**81739 München (DE)**

(72) Erfinder:
• **Winter, Peter**
**92559 Winklarn (DE)**
• **Stadler, Dominik**
**93128 Regenstauf (DE)**

(56) Entgegenhaltungen:
| | |
|---|---|
| EP-A1- 3 082 025 | KR-A- 20190 104 101 |
| US-A1- 2012 293 447 | US-A1- 2016 092 022 |
| US-A1- 2016 209 963 | US-A1- 2020 012 382 |

## Beschreibung

Die Erfindung betrifft ein Verfahren und eine entsprechende Vorrichtung zur Erhöhung der Zuverlässigkeit eines Berührungssensors, insbesondere eines zweidimensionalen Berührungssensors.

Ein Hausgerät kann einen zweidimensionalen Berührungssensor, z.B. als Teil eines berührungsempfindlichen Bildschirms, aufweisen, über den ein Nutzer des Hausgeräts durch Berühren der Bedienoberfläche des Berührungssensors eine Eingabe an das Hausgerät tätigen kann. Die Bedienoberfläche des Berührungssensors kann insbesondere bei einem Hausgerät verschmutzt und/oder mit Wasser behaftet sein. Ferner wird die Bedienoberfläche des Berührungssensors eines Hausgeräts relativ häufig gereinigt. Der Zustand der Bedienoberfläche eines Berührungssensors kann sich somit relativ häufig ändern.

Eine verschmutzte Bedienoberfläche, z.B. durch Wassertropfen, und/oder das Reinigen der verschmutzten Bedienoberfläche, d.h. eine Zustandsänderung der Bedienoberfläche eines Berührungssensors, können zu einer temporären Nicht-Bedienbarkeit des Berührungssensors des Hausgerätes führen. Dies kann zu unerwünschten Problemen beim Erfassen von Nutzereingaben führen.

US 2016/0092022 A1 beschreibt ein Verfahren zur Vermeidung von sogenannten "Ghost Touch" Ereignissen. US 2016/0209963 A1 beschreibt ein Verfahren zur Erhöhung der Effizienz bei der Erkennung von Berühr-Ereignissen. EP 3 082 025 A1 beschreibt ein Verfahren zur Ermittlung des Zustands eines Berührungssensors. KR 2019 0104101 A beschreibt ein Verfahren zur Erkennung von fehlerhaften Berührungen eines Touch Screens.

Das vorliegende Dokument befasst sich mit der technischen Aufgabe, die Zuverlässigkeit eines Berührungssensors, insbesondere eines Berührungssensors mit verschmutzter Oberfläche, zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Auswerte-Vorrichtung für einen Berührungssensor mit einer Mehrzahl von Sensorpunkten beschrieben. Der Berührungssensor kann ein zweidimensionaler Berührungssensor sein und/oder eine zweidimensionale Matrix von Sensorpunkten umfassen. Beispielsweise kann der Berührungssensor 100 oder mehr, oder 1000 oder mehr Sensorpunkte aufweisen. Insbesondere kann der Berührungssensor eine Matrix von M x N Sensorpunkten umfassen, wobei M und N jeweils 10 oder mehr, oder 50 oder mehr, oder 100 oder mehr sein können. Ggf. kann auch ein Berührungssensor mit einer relativ geringen Anzahl von Sensorpunkten (z.B. 2 x 7 oder 2 x 10) verwendet werden.

In einem bevorzugten Beispiel sind die Sensorpunkte des Berührungssensors in einer sogenannten Backgammon-Struktur angeordnet. Dabei können die Sensorpunkte in einer Reihe mit den Sensorpunkten in einer anderen Reihe Backgammon-artig ineinander verzahnt bzw. verschachtelt sein.

Der Berührungssensor kann ausgebildet sein, für ein Berührungs-Ereignis mit dem Finger eines menschlichen Nutzers berührt zu werden. Mit anderen Worten, es kann einem Nutzer ermöglicht werden, den Berührungssensor mit einem Finger zu berühren, um ein Berührungs-Ereignis zu bewirken. Dabei können im Rahmen eines Berührungs-Ereignisses ggf. die Sensorwerte mehrerer Sensorpunkte beeinflusst (insbesondere erhöht) werden. Das Zentrum der Berührung kann dabei an einem zentralen Sensorpunkt erfolgen, der typischerweise einen (im Vergleich zu den anderen Sensorpunkten) maximalen Sensorwert aufweist. Die um den zentralen Sensorpunkt liegenden Sensorpunkte weisen dann typischerweise ebenfalls (betraglich) erhöhte Sensorwerte auf (im Vergleich zu den Sensorwerten der Sensorpunkte die nicht berührt werden), die jedoch meist mit steigendem Abstand des jeweiligen Sensorpunktes zu dem zentralen Sensorpunkt abnehmen.

Der Berührungssensor kann als Teil einer Benutzerschnittstelle eines Geräts, insbesondere eines Hausgeräts, ausgebildet sein. Alternativ oder ergänzend kann der Berührungssensor Teil eines berührungsempfindlichen Bildschirms sein. Der Berührungssensor kann als ein kapazitiver und/oder resistiver Berührungssensor ausgebildet sein.

Die Vorrichtung kann eingerichtet sein, ein Berührungs-Ereignis zu detektieren. Zu diesem Zweck kann die Vorrichtung ausgebildet sein, wiederholt, insbesondere periodisch mit einer bestimmten Abtastfrequenz (z.B. von 1Hz oder mehr, oder von 10Hz oder mehr, oder von 100Hz oder mehr), an einer entsprechenden Sequenz von Zeitpunkten jeweils Sensorwerte der Mehrzahl von Sensorpunkten zu ermitteln. Es kann dann an jedem Zeitpunkt der Sequenz von Zeitpunkten überprüft werden, ob ein Berührungs-Ereignis vorliegt oder nicht. Insbesondere kann auf Basis der Sensorwerte der Mehrzahl von Sensorpunkten an einem Zeitpunkt aus der Sequenz von Zeitpunkten entschieden werden, ob ein Berührungs-Ereignis vorliegt. Bei Vorliegen eines Berührungs-Ereignisses kann dann (auf Basis der Sensorwerte) eine Teilmenge aus der Mehrzahl von Sensorpunkten ermittelt werden, an der das Berührungs-Ereignis erfolgt ist. Die Teilmenge kann dabei den zentralen Sensorpunkt (mit dem maximalen Sensorwert) und eine bestimmte Anzahl von Sensorpunkten aus der Umgebung des zentralen Sensorpunktes umfassen. Beispielsweise können Sensorpunkte mit einem Abstand von bis zu 5 Sensorpunkten, oder mit einem Abstand von bis zu 10 Sensorpunkten, oder mit einem Abstand von bis zu 20 Sensorpunkten berücksichtigt werden.

Zur Erkennung eines Berührungs-Ereignisses können die Sensorwerte mit einem Schwellenwert verglichen werden. Wenn ein oder mehrere Sensorwerte erkannt werden, die über dem Schwellenwert liegen, so kann daraus geschlossen werden, dass an der Position der entsprechenden ein oder mehreren Sensorpunkte ein Berührungs-Ereignis vorliegt. Des Weiteren kann der Sensorpunkt mit dem maximalen Sensorwert ermittelt werden. Dieser Sensorpunkt kann dann als der zentrale Sensorpunkt des Berührungs-Ereignisses betrachtet werden.

Die Vorrichtung kann eingerichtet sein, für ein detektiertes Berührungs-Ereignis, eine Ist-Verteilung von Sensorwerten zumindest eines Teils der Mehrzahl von Sensorpunkten zu ermitteln. Insbesondere kann die Ist-Verteilung der Sensorwerte (ggf. begrenzt) für die ermittelte Teilmenge von Sensorpunkten ermittelt werden. Die Ist-Verteilung kann dabei derart ermittelt werden, dass die Ist-Verteilung die Sensorwerte von Sensorpunkten (aus der Teilmenge von Sensorpunkten) als Funktion des Abstands des jeweiligen Sensorpunktes von dem zentralen Sensorpunkte anzeigt.

Die Vorrichtung kann ferner eingerichtet sein, die Ist-Verteilung für das Berührungs-Ereignis mit einer Referenz-Verteilung (für das Berührungs-Ereignis) zu vergleichen. Dabei kann die Referenz-Verteilung spezifisch für das Berührungs-Ereignis ermittelt werden. Insbesondere kann die Referenz-Verteilung in Abhängigkeit von dem maximalen Sensorwert (des zentralen Sensorpunktes des Berührungs-Ereignisses) ermittelt, beispielsweise in Abhängigkeit von dem maximalen Sensorwert skaliert, werden. Alternativ oder ergänzend kann die Referenz-Verteilung derart ermittelt werden, dass die Referenz-Verteilung Referenz- und/oder Grenzwerte für die Sensorwerte von Sensorpunkten als Funktion des Abstands des jeweiligen Sensorpunktes von dem zentralen Sensorpunkt des Berührungs-Ereignisses anzeigt.

Des Weiteren kann die Vorrichtung eingerichtet sein, in Abhängigkeit von dem Vergleich, eine Neu-Initialisierung des Berührungssensors durchzuführen. Insbesondere kann im Rahmen des Vergleichs zumindest ein Sensorwert der Ist-Verteilung mit einem entsprechenden Referenz- und/oder Grenzwert der Referenz-Verteilung verglichen werden. Bevorzugt werden alle Sensorwerte der Ist-Verteilung jeweils mit einem entsprechenden Referenz- und/oder Grenzwert der Referenz-Verteilung verglichen. In Abhängigkeit von den Vergleichen der einzelnen Sensorwerte und der entsprechenden Referenz- und/oder Grenzwerte kann dann in präziser Weise entschieden werden, ob eine Neu-Initialisierung des Berührungssensors durchzuführen ist oder nicht. Insbesondere kann entschieden werden, ob ein inkorrektes Berührungs-Ereignis (mit einer inkorrekten Ist-Verteilung der Sensorwerte) oder ein korrektes Berührungs-Ereignis (mit einer korrekten Ist-Verteilung der Sensorwerte) vorliegt. Eine Neu-Initialisierung (insbesondere eine Neu-Kalibrierung) des Berührungssensors kann dann (ggf. nur dann) durchgeführt werden, wenn ein inkorrektes Berührungs-Ereignis erkannt wurde.

Die beschriebene Vorrichtung ermöglicht es (auf Basis der Ist-Verteilung der Sensorwerte), in effizienter und zuverlässiger Weise ein inkorrektes Berührungs-Ereignis zu detektieren. Ein inkorrektes Berührungs-Ereignis kann dadurch bewirkt werden, dass an der Bedienoberfläche der Berührungssensors eine Zustandsänderung erfolgt ist. Beispielsweise kann sich der Zustand der Bedienoberfläche des Berührungssensors durch eine Verschmutzung der Bedienoberfläche geändert haben. Andererseits kann sich der Zustand der Bedienoberfläche durch eine (anschließende) Reinigung der Bedienoberfläche geändert haben. Die Neu-Initialisierung des Berührungssensors ermöglicht es, den Berührungssensor an den neuen Zustand der Bedienoberfläche anzupassen, und dadurch die Zuverlässigkeit des Berührungssensors zu erhöhen.

Die einzelnen Sensorpunkte des Berührungssensors können eingerichtet sein, jeweils einen Messwert zu erfassen. Des Weiteren können die einzelnen Sensorpunkte ausgebildet sein, als Sensorwert jeweils den um einen Sensorpunkt-spezifischen Basiswert korrigierten Messwert bereitzustellen. Beispielsweise kann der Basiswert von dem Messwert abgezogen werden, um den Sensorwert zu ermitteln bzw. bereitzustellen. Die Basiswerte der einzelnen Sensorpunkte können im Rahmen einer Initialisierung bzw. einer Kalibrierung des Berührungssensors ermittelt und gespeichert werden. Die Vorrichtung kann eingerichtet sein, im Rahmen der Neu-Initialisierung des Berührungssensors die Basiswerte für zumindest einen Teil der Mehrzahl von Sensorpunkten zu aktualisieren. Dabei können die aktualisierten Basiswerte der einzelnen Sensorpunkte derart ermittelt werden, dass der aktualisierte Basiswert eines Sensorpunktes dem Messwert des Sensorpunktes entspricht, für den Fall, dass kein Berührungs-Ereignis vorliegt. Durch eine derartige Anpassung der Basiswerte der Sensorpunkte des Berührungssensors kann auch bei einer verschmutzten Bedienoberfläche (nach Durchführung der Neu-Initialisierung) ein zuverlässiger Betrieb des Berührungssensor ermöglicht werden.

Die Vorrichtung kann eingerichtet sein, für ein detektiertes Berührungs-Ereignis, einen Wert eines Abstandsmaßes zwischen der Ist-Verteilung und der Referenz-Verteilung zu ermitteln. Ein beispielhaftes Abstandsmaß ist eine mittlere quadratische Abweichung. Alternativ oder ergänzend kann der Wert des Abstandsmaßes davon abhängig sein, ob der Sensorwert zumindest eines Sensorpunktes den durch die Referenz-Verteilung angezeigten Grenzwert überschreitet oder nicht. Beispielsweise kann das Abstandsmaß derart sein, dass der Wert des Abstandsmaßes anzeigt, ob zumindest ein Sensorwert der Ist-Verteilung den entsprechenden Grenzwert der Referenz-Verteilung überschreitet.

Es kann dann in präziser Weise in Abhängigkeit von dem Wert des Abstandsmaßes entschieden werden, ob eine Neu-Initialisierung des Berührungssensors durchzuführen ist oder nicht und/oder ob ein inkorrektes Berührungs-Ereignis oder ein korrektes Berührungs-Ereignis vorliegt.

Die Referenz-Verteilung kann somit Grenzwerte für die Sensorwerte von Sensorpunkten des Berührungssensors als Funktion des Abstands des jeweiligen Sensorpunktes von dem zentralen Sensorpunkt anzeigen, der für das Berührungs-Ereignis den maximalen Sensorwert anzeigt. Dabei kann die Referenz-Verteilung zumindest teilweise experimentell im Vorfeld für den Berührungssensor ermittelt worden sein. Insbesondere kann ein grundsätzlicher Verlauf der Referenz-Verteilung im Vorfeld ermittelt worden sein. Der grundsätzliche Verlauf kann dann für das detektierte Berührungs-Ereignis angepasst (z.B. skaliert und/oder verschoben) werden. Insbesondere können die Grenzwerte der Referenz-Verteilung in Abhängigkeit von dem maximalen Sensorwert angepasst, z.B. skaliert, werden. Die Referenz-Verteilung ist typischerweise derart, dass der durch die Referenz-Verteilung angezeigte Grenzwert für einen Sensorwert mit steigendem Abstand des jeweiligen Sensorpunktes zu dem zentralen Sensorpunkt abnimmt.

Die Vorrichtung kann eingerichtet sein für jeden Sensorwert aus der Ist-Verteilung zu überprüfen, ob der jeweilige Sensorwert den entsprechenden Grenzwert aus der Referenz-Verteilung überschreitet oder nicht. Es kann dann in Abhängigkeit davon entschieden werden, ob eine Neu-Initialisierung des Berührungssensors durchzuführen ist oder nicht und/oder ob ein inkorrektes Berührungs-Ereignis oder ein korrektes Berührungs-Ereignis vorliegt. Insbesondere kann entschieden werden, dass eine Neu-Initialisierung des Berührungssensors durchzuführen ist und/oder dass ein inkorrektes Berührungs-Ereignis vorliegt, wenn erkannt wird, dass zumindest ein Sensorwert den entsprechenden Grenzwert überschreitet. So kann in besonders zuverlässiger Weise ein inkorrektes Berührungs-Ereignis detektiert werden, und in Reaktion darauf eine Neu-Initialisierung des Berührungssensors durchgeführt werden, um (im Anschluss an die Neu-Initialisierung) auch bei einer verschmutzten Bedienoberfläche zuverlässig (korrekte) Berührungs-Ereignisse erkennen zu können.

Die Vorrichtung kann somit eingerichtet sein, für ein detektiertes Berührungs-Ereignis, in Abhängigkeit von dem Vergleich der Ist-Verteilung mit der Referenz-Verteilung zu entscheiden, ob es sich bei dem detektierten Berührungs-Ereignis um ein inkorrektes Berührungs-Ereignis oder um ein korrektes Berührungs-Ereignis handelt. Wenn entschieden wird, dass es sich um ein inkorrektes Berührungs-Ereignis handelt, so kann für einen bestimmten (ggf. einstellbaren) Überwachungszeitraum ab dem erkannten inkorrekten Berührungs-Ereignis überprüfen werden, ob nachfolgend zu dem erkannten inkorrekten Berührungs-Ereignis ein korrektes Berührungs-Ereignis detektiert wird. Es kann somit für einen Überwachungszeitraum überprüft werden, ob weitere inkorrekte Berührungs-Ereignisse oder zumindest ein korrektes Berührungs-Ereignis detektiert werden.

Die Neu-Initialisierung des Berührungssensors kann dann im Anschluss an den Überwachungszeitraum in Abhängigkeit von der Überprüfung während des Überwachungszeitraums durchgeführt werden. Insbesondere kann die Vorrichtung eingerichtet sein, eine Neu-Initialisierung des Berührungssensors (ggf. nur dann) durchzuführen, wenn innerhalb des Überwachungszeitraums ab dem erkannten inkorrekten Berührungs-Ereignis kein korrektes Berührungs-Ereignis detektiert wird. So kann ein besonders stabiler und zuverlässiger Betrieb des Berührungssensors bewirkt werden. Insbesondere können so fehlerhafte Neu-Initialisierungen des Berührungssensors vermieden werden.

Gemäß einem weiteren Aspekt wird ein Hausgerät (z.B. eine Waschmaschine, ein Trockner, eine Spülmaschine, ein Kühlschrank, ein Herd, ein Ofen, etc.) beschrieben, das eine Benutzerschnittstelle mit einem Berührungssensor umfasst, und das eine Auswerte-Vorrichtung umfasst, die wie in diesem Dokument beschrieben ausgebildet ist.

Gemäß einem weiteren Aspekt wird ein (Computer-implementiertes) Verfahren zum Betrieb eines Berührungssensors beschrieben, der eine Mehrzahl von Sensorpunkten umfasst. Das Verfahren umfasst, für ein Berührungs-Ereignis, das Ermitteln einer Ist-Verteilung von Sensorwerten zumindest eines Teils der Mehrzahl von Sensorpunkten. Des Weiteren umfasst das Verfahren das Vergleichen der Ist-Verteilung mit einer Referenz-Verteilung, und in Abhängigkeit von dem Vergleich, das Durchführen einer Neu-Initialisierung des Berührungssensors. Dabei kann die Neu-Initialisierung darauf ausgerichtet sein, zu bewirken, dass im Anschluss an die Neu-Initialisierung die Ist-Verteilung für ein Berührungs-Ereignis mit erhöhter Wahrscheinlichkeit zu der Referenz-Verteilung passt und/oder den durch die Referenz-Verteilung angezeigten Anforderungen entspricht.

Es ist zu beachten, dass jegliche Aspekte der in diesem Dokument beschriebenen Vorrichtung und/oder des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen

Figur 1a     ein beispielhaftes Hausgerät mit einer berührungsempfindlichen Bedienoberfläche;
Figur 1b     einen beispielhaften zweidimensionalen Berührungssensor;
Figur 2a     eine beispielhafte Verteilung von Sensorwerten eines Berührungssensors;
Figur 2b     eine gemessene Ist-Verteilung und eine Referenz-Verteilung von Sensorwerten; und
Figur 3     ein Ablaufdiagramm eines beispielhaften Verfahrens zum Betrieb eines Berührungssensors.

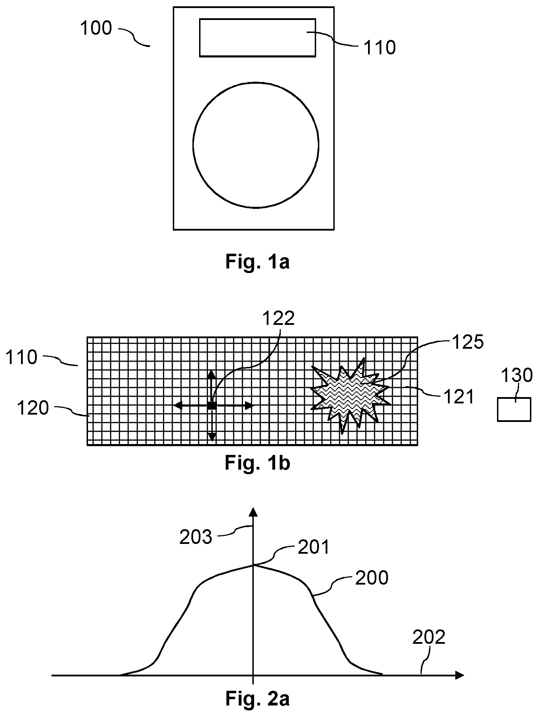

Wie eingangs dargelegt, befasst sich das vorliegende Dokument mit der Erhöhung der Zuverlässigkeit eines zweidimensionalen Berührungssensors mit einer Bedienoberfläche, auf der Verschmutzungen und/oder Flüssigkeiten angeordnet sein können. In diesem Zusammenhang zeigt Fig. 1a ein beispielhaftes Hausgerät 100, z.B. eine Waschmaschine oder einen Trockner, mit einem zweidimensionalen Berührungssensor 110, der z.B. Teil eines berührungsempfindlichen Bildschirms sein kann.

Wie in Fig. 1b dargestellt, umfasst der zweidimensionale Berührungssensor 110 eine Matrix 120 von Sensorpunkten 121. Die einzelnen Sensorpunkte 121 sind typischerweise derart klein, dass bei einer Berührung des Berührungssensors 110 mit dem Finger meist von mehreren Sensorpunkten 121 (erhöhte) Sensorwerte erfasst werden. In dem in Fig. 1b dargestellten Beispiel wurden durch ein Berührungs-Ereignis die Sensorwerte des zentralen Sensorpunktes 122 und der Sensorpunkte 121 einer bestimmten Umgebung um den zentralen Sensorpunkt 122 erhöht (dargestellt durch die Pfeile). Der zentrale Sensorpunkt 122 liefert aufgrund der Berührung einen bestimmten Maximalwert. Die Sensorpunkte 121 in der Umgebung des zentralen Sensorpunktes 122 liefern Sensorwerte, die erhöht aber typischerweise kleiner als der Maximalwert sind, wobei die Sensorwerte typischerweise mit steigendem Abstand zu dem zentralen Sensorpunkt 122 abnehmen.

Bei einer Berührung des zweidimensionalen Berührungssensors 110 mit einem Finger ergibt sich somit eine typischerweise Verteilung 200 der Sensorwerte 203, wie beispielhaft in Fig. 2a dargestellt. Die Verteilung 200 weist an der Position des zentralen Sensorpunktes 122 einen Maximalwert 201 auf. Die Sensorwerte 203 sinken dann mit steigendem Abstand 202 von der Position des zentralen Sensorpunktes 122. In Fig. 2a ist beispielhaft eine eindimensionale Verteilung 200 dargestellt. Für einen zweidimensionalen Berührungssensor 110 ergibt sich typischerweise eine entsprechende zweidimensionale Verteilung 200 (die z.B. rotationssymmetrisch um die Position des zentralen Sensorpunktes 122 ist).

Der Berührungssensor 110 kann eine Auswerte-Vorrichtung 130 (z.B. mit einem Mikroprozessor) umfassen, die eingerichtet ist, eine Berührung von Sensorpunkten 121, 122 des Berührungssensors 110 zu detektieren. Insbesondere können die Sensorwerte 203 der einzelnen Sensorpunkte 121, 122 ermittelt werden. Auf Basis der Sensorwerte 203 der einzelnen Sensorpunkte 121, 122 können eine Berührung und die Position einer Berührung auf dem Berührungssensor 110 erkannt werden.

Die Oberfläche des Berührungssensors 110 kann, wie in Fig. 1b dargestellt, Verschmutzungen 125 aufweisen. Beispielsweise kann sich ein Wassertropfen auf der Oberfläche des Berührungssensors 110 befinden. Eine Verschmutzung 125 auf der Oberfläche des Berührungssensors 110 kann dazu führen, dass eine Berührung eines Sensorpunktes 121, 122 nicht mehr zuverlässig von dem Berührungssensor 110 erkannt wird. Somit kann durch eine Verschmutzung 125 die Zuverlässigkeit des Berührungssensors 110 beeinträchtigt werden.

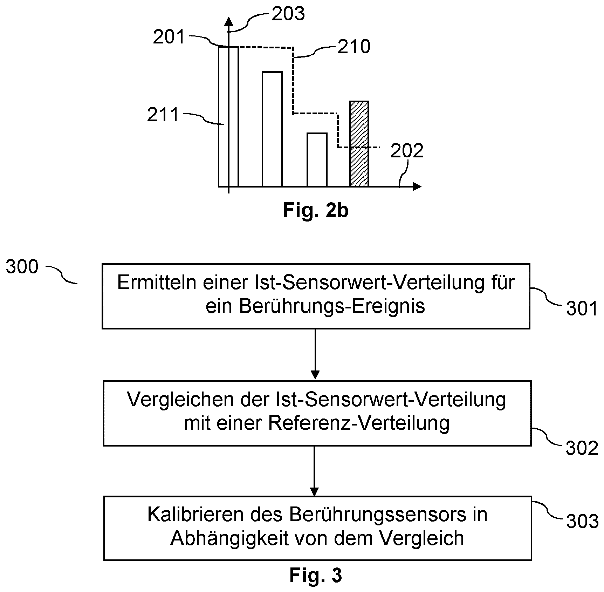

Die Auswerte-Vorrichtung 130 kann eingerichtet sein, bei einer Berührung des Berührungssensors 110 eine (zwei-dimensionale) Ist-Verteilung der Sensorwerte 203 der Sensorpunkte 121, 122 zu ermitteln. Ein beispielhafte (eindimensionale) Ist-Verteilung 211 ist in Fig. 2b dargestellt. Die Ist-Verteilung 211 umfasst in dem dargestellten Beispiel Sensorwerte 203 für den zentralen Sensorpunkt 122 und für drei weitere benachbarte Sensorpunkte 121. Die Ist-Verteilung 211 kann mit einer Referenz-Verteilung 210 verglichen werden. Dabei kann die Referenz-Verteilung 210 eine Verteilung der Sensorwerte 203 anzeigen, die vorliegen sollte und/oder die nicht überschritten werden sollte, wenn der Berührungssensor 110 korrekt funktioniert (z.B., wenn keine Verschmutzung 125 auf der Oberfläche des Berührungssensors 110 vorliegt).

Die Auswerte-Vorrichtung 130 kann eingerichtet sein, auf Basis des Vergleichs zwischen der Ist-Verteilung 211 und der Referenz-Verteilung 210 zu entscheiden, ob der Berührungssensor 110 (z.B. aufgrund einer Verschmutzung 125) neu kalibriert werden muss oder nicht. Insbesondere kann ein Abstandsmaß zwischen der Ist-Verteilung 211 und der Referenz-Verteilung 210 ermittelt werden, und es kann in Abhängigkeit von dem ermittelten Abstandsmaß entschieden werden, ob der Berührungssensor 110 neu kalibriert werden muss oder nicht. In dem in Fig. 2b dargestellten Beispiel wird z.B. überprüft, ob zumindest ein Sensorwert 203 der Ist-Verteilung 211 die Referenz-Verteilung 210 übersteigt. Wenn dies der Fall ist, so kann entschieden werden, dass der Berührungssensor 110 neu kalibriert werden muss. Wenn andererseits erkannt wird, dass die Sensorwerte 203 der Ist-Verteilung 211 stets unterhalb der Referenz-Verteilung 210 liegen, so kann ggf. entschieden werden, dass der Berührungssensor 110 nicht neu kalibriert werden muss.

Im Rahmen der Kalibrierung kann für jeden der Sensorpunkte 121, 122 des Berührungssensors 110 ein Basiswert ermittelt werden, der von dem jeweiligen Sensorpunkt 121, 122 als Messwert ermittelt wird, wenn keine Berührung des jeweiligen Sensorpunktes 121, 122 erfolgt. Als Sensorwert 203 kann dann von dem jeweiligen Sensorpunkt 121, 122 der Anteil des Messwertes des Sensorpunktes 121, 122 angezeigt werden, der über den Basiswert des Sensorpunktes 121, 122 hinausgeht. Insbesondere kann von einem Sensorpunkt 121, 122 der Messwert $S_m$ erfasst werden. Der Messwert $S_m$ entspricht z.B. bei Nicht-Berühren des Sensorpunktes 121, 122 dem Basiswert $S_b$. Der Sensorpunkt 121, 122 gibt dann als Sensorwert 203 $S_s$ den Wert $S_s = S_m - S_b = 0$ aus. Bei einer Berührung ist der Messwert $S_m$ typischerweise höher als der Basiswert $S_b$. Als Sensorwert 203 wird dann der Wert $S_s = S_m - S_b$ angezeigt. Im Rahmen der Kalibrierung eines Sensorpunktes 121, 122 kann der Basiswert $S_b$ des Sensorpunktes 121, 122 neu eingestellt werden (z.B. als der Messwert $S_m$, der bei Nicht-Berührung des Sensorpunktes 121, 122 von dem Sensorpunkt 121, 122 erfasst wird).

Durch die Neu-Kalibrierung der Sensorpunkte 121, 122 des Berührungssensors 110 kann bewirkt werden, dass auch bei Vorliegen einer Verschmutzung 125 auf der Oberfläche des Berührungssensors 110 eine Berührung in zuverlässiger Weise erkannt werden kann.

Die Vorrichtung 130 kann eingerichtet sein, im Anschluss an das Erkennen einer inkorrekten Berührung, die eine Ist-Verteilung 211 der Sensorwerte 203 aufweist, die in unzulässiger Weise von der Referenz-Verteilung 210 abweicht, eine Zeitmessung zu starten (z.B. mittels eines Zählers). Wenn innerhalb eines vordefinierten Zeitraums nach der erkannten, inkorrekten Berührung keine korrekte Berührung erkannt wird, so kann ggf. eine Neu-Kalibrierung des Berührungssensors 110 durchgeführt werden. Wenn vor Ablauf des Zeitraums eine weitere Berührung erkannt wird, so erfolgt eine Überprüfung der Berührung, insbesondere der Ist-Verteilung 211 der Sensorwerte 203 der Berührung. Falls die Berührung als korrekt erkannt wird, so wird der Berührungssensor 110 ohne Neu-Kalibrierung weiterbetrieben. Wenn eine inkorrekte Berührung erkannt wird, so kann (z.B. nach Ablauf des vordefinierten Zeitraums) eine Neu-Kalibrierung des Berührungssensors 110 durchgeführt werden. So kann ein stabiler Betrieb des Berührungssensors 110 bewirkt werden.

Es wird somit ein Verfahren beschrieben, bei dem durch Analyse der Signalhübe (d.h. durch Auswertung der Signalwerte 203) aller Touch-Sensoren 121, 122, welche für eine Touchauswertung relevant sind und welche sich im Bedienbereich befinden, eine ungültige Touchbedienung detektiert wird. Eine ungültige Touchbedienung kann dabei mittels einer FrameShapeDetection-Funktion erkannt werden (d.h. mittels eines Vergleichs zwischen der Ist-Verteilung 211 der Signalwerte 203 und einer Referenz-Verteilung 210 der Signalwerte 203).

Die FrameShapeDetection-Funktion kann über einen Form-Filter (d.h. einen Frame-Shape-Filter) realisiert werden. Der Filter überprüft, ob die Kontur der Sensivitäts-Verteilung 211 über den 2D Matrix-Sensor 110 plausibel ist. Der Filter kann konfiguriert werden, um dem Filter an unterschiedliche Störverhalten anzupassen. Die Konfiguration kann über ein Array von Shift-Koeffizienten, welche ein Limit bzw. einen Grenzwert für jeden Sensorpunkt 121 mit Abstand ($|i - i_m|$) symmetrisch zu dem zentralen Sensorpunkt 122 mit dem höchsten Signalhub 211 definieren, durchgeführt werden. Die Funktion der Grenzwerte (d.h. die Referenz-Verteilung 210) kann dynamisch in Abhängigkeit von dem zentralen Sensorpunkt 122 mit dem maximalen Signalwert 201 durch die Auswerte-Vorrichtung 130 berechnet werden. Fig. 2b zeigt die Grenzwerte des Form-Filters 210 als Funktion des Abstands 202 ($|i - i_m|$) zu dem zentralen Sensorpunkt 122. Des Weiteren zeigt Fig. 2b die Sensorwerte 203 der Ist-Verteilung 211 für ein Berührungs-Ereignis.

Die Berechnung der Grenzwerte (d.h. *Limit(i)*) des Form-Filters 210 kann über die folgende Funktion erfolgen:

$$Limit(i) = f(|i - i_m|) = \frac{s_m}{2^{shift\_coef[||i-i_m||]}},$$

wobei $s_m$ der maximale Sensorwert 201 ist, wobei i der Index des betrachteten Sensorpunktes 121 ist, wobei $i_m$ der Index des zentralen Sensorpunktes 122 (mit dem maximalen Sensorwert 201) ist, wobei *shift_coef[]* ein definiertes Array bzw. eine definierte Funktion der Koeffizienten des Form-Filters ist, und wobei $|i - i_m|$ der Abstand 202 des Sensorpunktes 121 mit dem Index i zu dem zentralen Sensorpunkt 122 mit dem Index $i_m$ ist. In dem in Fig. 2b dargestellten Beispiel ist *shift_coef[]* derart definiert, dass *shift_coef[0]=0, shift_coef[1]=0, shift_coef[2]=1, shift_coef[3]=2.*

Die Auswerte-Vorrichtung 130 kann eingerichtet sein, die Sensorpunkte 121, 122 des Berührungssensors 110 wiederholt, insbesondere periodisch, abzufragen. Insbesondere können wiederholt die Sensorwerte 203 der Sensorpunkte 121, 122 abgefragt werden. Dabei können die Messwerte der Sensorpunkte 121, 122 ggf. gefiltert werden.

Basierend auf den Sensorwerten 203 kann an einem bestimmten Zeitpunkt ein Berührungs-Ereignis bzw. ein Touch-Event detektiert werden. Des Weiteren kann mittels der Grenzwerte *Limit(i)* des Form-Filters 210 (bzw. der Referenz-Verteilung) überprüft werden, ob es sich bei dem Berührungs-Ereignis um ein korrektes oder ein inkorrektes Berührungs-Ereignis handelt. Zu diesem Zweck können die im Rahmen des Berührungs-Ereignisses erfassten Ist-Sensorwerte 203 der Sensorpunkte 121 mit den Grenzwerten *Limit(i)* des Form-Filters 210 verglichen werden (je nach Abstand $|i - i_m|$ des jeweiligen Sensorpunktes 121 von dem zentralen Sensorpunkt 122 des Berührungs-Ereignisses). Ein Berührungs-Ereignis kann als inkorrekt erkannt werden, wenn der Ist-Sensorwert 203 von zumindest einem Sensorpunkt 121 den entsprechenden Grenzwert *Limit(i)* des Form-Filters 210 überschreitet. Andererseits kann das Berührungs-Ereignis ggf. als korrekt erkannt werden.

Durch eine Bedienhandlung bei verschmutzter Oberfläche bzw. durch einen Reinigungsprozess, insbesondere durch eine Zustandsänderung der Bedienoberfläche des Berührungssensors 110, kann die Verteilung 211 der Signalwerte 203 über den Berührungssensor 110 verändert werden, was mittels des Frame-Shape-Filters 210 detektiert werden kann. Die Auswerte-Vorrichtung 130 kann mittels einer FrameShapeDetection-Funktion den Zustand des Frame-Shape-Filters kontinuierlich auswerten. Erkennt die FrameShapeDetection-Funktion über einen konfigurierbaren Zeitraum eine unplausible Ist-Verteilung 211 der Signalwerte 203 kann daraufhin der Berührungssensor 110 (d.h. das Touch-System) neu initialisiert werden. Durch die Neuinitialisierung können die aufgrund der Verschmutzung bzw. aufgrund der Zustandsänderung der Bedienoberfläche verzerrten Sensor-Filterwerte korrigiert werden.

Die Auswerte-Vorrichtung 130 kann somit eingerichtet sein, zu überprüfen, ob innerhalb eines vordefinierten Beobachtungszeitraums ab der Erkennung eines inkorrekten Berührungs-Ereignisses weiterhin (nur) inkorrekte Berührungs-Ereignisse detektiert und/oder kein korrektes Berührungs-Ereignis detektiert wird. Wenn dies der Fall ist, so kann eine Neuinitialisierung bzw. eine Neu-Kalibrierung des Berührungssensors 110 durchgeführt werden.

Durch die in diesem Dokument beschriebenen Maßnahmen kann insbesondere in dem folgenden Anwendungsbeispiel die Zuverlässigkeit eines Berührungssensors 110 erhöht werden. Es hat sich Wasser auf der Bedienoberfläche des Berührungssensors 110 verteilt, und das Gerät 110 wird über den Berührungssensor 110 bedient. Durch die Verschmutzung 125 ist ggf. keine eindeutige Bedieneingabe mehr möglich. Dieser Zustand kann durch die ungültige Verteilung 211 der Signalhübe 203 über den 2DSensor 110 erkannt werden. Daraufhin wird der Berührungssensor 110 neu initialisiert und der aktuelle Zustand (d.h. Wasser auf Bedienoberfläche des Berührungssensors 110) wird somit als neue Basis für die Auswertung von Berührungs-Ereignissen definiert. Der Nutzer kann daraufhin das Gerät 110 wieder bedienen.

Fig. 3 zeigt ein Ablaufdiagramm eines beispielhaften (Computer-implementierten) Verfahrens 300 zum Betrieb eines Berührungssensors 110, wobei der Berührungssensor 110 eine Mehrzahl, insbesondere eine zweidimensionale Matrix 122, von Sensorpunkten 121, 122 umfasst. Dabei ist jeder Sensorpunkt 121, 122 ausgebildet, einen Sensorwert 203 bereitzustellen. Das Verfahren 300 kann durch eine Auswerte- und/oder SteuerVorrichtung 130 des Berührungssensors 110 ausgeführt werden.

Das Verfahren 300 umfasst, für ein detektiertes Berührungs-Ereignis (bei dem der Berührungssensor 110 z.B. mit dem Finger eines Nutzers berührt wurde), das Ermitteln 301 einer Ist-Verteilung 211 von Sensorwerten 203 zumindest eines Teils der Mehrzahl von Sensorpunkten 121, 122. Die Ist-Verteilung 211 kann insbesondere die Sensorwerte 203 an und in dem (zweidimensionalen) Umfeld des zentralen Sensorpunktes 122 umfassen, an der das Berührungs-Ereignis erfolgt ist. Die (zweidimensionale) Ist-Verteilung 211 kann dabei die Sensorwerte 203 als Funktion des Abstands 202 zu dem zentralen Sensorpunkt 122 anzeigen.

Des Weiteren umfasst das Verfahren 300 das Vergleichen 302 der Ist-Verteilung 211 mit einer Referenz-Verteilung 210 (z.B. mit dem o.g. Form-Filter). Die Referenz-Verteilung 210 kann dabei spezifisch für das Berührungs-Ereignis ermittelt werden. Insbesondere kann die Referenz-Verteilung 210 an ein oder mehrere Sensorwerte 203, insbesondere an den maximalen Sensorwert 201, angepasst werden, die im Rahmen des Berührungs-Ereignisses erfasst wurden. Die Referenz-Verteilung 210 kann z.B. den maximalen Sensorwert 201 als Maximalwert aufweisen. Des Weiteren kann die Referenz-Verteilung 210 Grenzwerte für die Sensorwerte 203 als Funktion des Abstands 202 zu dem zentralen Sensorpunkt 122 anzeigen.

Das Verfahren 300 umfasst ferner, in Abhängigkeit von dem Vergleich, das Durchführen 303 einer Neu-Initialisierung des Berührungssensors 110. Insbesondere kann auf Basis des Vergleichs entschieden werden, ob ein korrektes Berührungs-Ereignis vorliegt oder ob ein inkorrektes Berührungs-Ereignis vorliegt. Ein inkorrektes Berührungs-Ereignis kann insbesondere dann vorliegen, wenn im Rahmen des Vergleichs erkannt wird, dass ein oder mehrere Sensorwerte 203 der Ist-Verteilung 211 die entsprechenden Grenzwerte der Referenz-Verteilung 210 überschreiten. Wenn ein inkorrektes Berührungs-Ereignis erkannt wird, kann, z.B. nach Ablauf eines Überwachungszeitraums, eine Neu-Initialisierung des Berührungssensors 110 durchgeführt werden (insbesondere um die Basiswerte der einzelnen Sensorpunkte 121, 122 an die aktualisierte Situation auf der Bedienoberfläche des Berührungssensors 110 anzupassen).

Durch die in diesem Dokument beschriebenen Maßnahmen kann die Zuverlässigkeit eines Touchsystems 110 erhöht werden, insbesondere bezüglich einer stabileren Touchbedienbarkeit bei einer verunreinigten Bedienoberfläche und/oder bezüglich der Vermeidung einer Nicht-Bedienbarkeit des Touchsystems 110 nach Abwischen von Verunreinigungen 125.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Verfahrens und/oder der vorgeschlagenen Vorrichtung veranschaulichen sollen.

**Patentansprüche**

**1.** Auswerte-Vorrichtung (130) für einen Berührungssensor (110) mit einer Mehrzahl von Sensorpunkten (121, 122); wobei ein Sensorpunkt (121, 122) jeweils eingerichtet ist, einen Messwert zu erfassen, und ausgebildet ist, als Sensorwert (203) den um einen Sensorpunkt-spezifischen Basiswert korrigierten Messwert bereitzustellen; wobei die Vorrichtung (130) eingerichtet ist, für ein Berührungs-Ereignis

- Sensorwerte (203) von zumindest einer Teilmenge der Mehrzahl von Sensorpunkten (121, 122) zu ermitteln;
- auf Basis der Sensorwerte (203) einen zentralen Sensorpunkt (122) aus der Teilmenge von Sensorpunkten (121, 122) zu identifizieren, der einen maximalen Sensorwert (201) aufweist;
- eine Ist-Verteilung (211) von Sensorwerten (203) der Teilmenge von Sensorpunkten (121, 122) zu ermitteln; wobei die Ist-Verteilung (211) die Sensorwerte (203) der Teilmenge von Sensorpunkten (121, 122) als Funktion eines Abstands (202) des jeweiligen Sensorpunktes (121, 122) von dem zentralen Sensorpunkt (122) anzeigt;
- die Ist-Verteilung (211) mit einer Referenz-Verteilung (210) zu vergleichen; wobei die Referenz-Verteilung (210) Referenz- und/oder Grenzwerte für die Sensorwerte (203) von Sensorpunkten (121, 122) als Funktion des Abstands (202) des jeweiligen Sensorpunktes (121, 122) von dem zentralen Sensorpunkt (122) anzeigt; und
- in Abhängigkeit von dem Vergleich, eine Neu-Initialisierung des Berührungssensors (110) durchzuführen, um den Berührungssensor (110) an einen neuen Zustand einer Bedienoberfläche des Berührungssensors (110) anzupassen; wobei im Rahmen der Neu-Initialisierung des Berührungssensors (110) die Basiswerte der Teilmenge von Sensorpunkten (121, 122) aktualisiert werden.

2. Auswerte-Vorrichtung (130) gemäß Anspruch 1, wobei die Vorrichtung (130) eingerichtet ist, für das Berührungs-Ereignis, die Referenz-Verteilung (210) in Abhängigkeit von dem maximalen Sensorwert (201) zu ermitteln, insbesondere in Abhängigkeit von dem maximalen Sensorwert (201) zu skalieren.

3. Auswerte-Vorrichtung (130) gemäß Anspruch 2, wobei die Vorrichtung (130) eingerichtet ist, für das Berührungs-Ereignis,

    - einen Sensorwert (203) der Ist-Verteilung (203) mit einem entsprechenden Referenz- und/oder Grenzwert der Referenz-Verteilung (210) zu vergleichen; und
    - in Abhängigkeit davon zu entscheiden, ob eine Neu-Initialisierung des Berührungssensors (110) durchzuführen ist oder nicht.

4. Auswerte-Vorrichtung (130) gemäß einem der vorhergehenden Ansprüche, wobei die Vorrichtung (130) eingerichtet ist, für das Berührungs-Ereignis,

    - einen Wert eines Abstandsmaßes zwischen der Ist-Verteilung (211) und der Referenz-Verteilung (210) zu ermitteln; und
    - in Abhängigkeit von dem Wert des Abstandsmaßes zu entscheiden, ob eine Neu-Initialisierung des Berührungssensors (110) durchzuführen ist oder nicht und/oder ob ein inkorrektes Berührungs-Ereignis oder ein korrektes Berührungs-Ereignis vorliegt.

5. Auswerte-Vorrichtung (130) gemäß Anspruch 4, wobei

    - die Referenz-Verteilung (210) Grenzwerte für die Sensorwerte (203) von Sensorpunkten (121, 122) anzeigt; und
    - der Wert des Abstandsmaßes davon abhängig ist, ob der Sensorwert (203) eines Sensorpunktes (121, 122) den durch die Referenz-Verteilung (210) angezeigten Grenzwert überschreitet oder nicht.

6. Auswerte-Vorrichtung (130) gemäß einem der vorhergehenden Ansprüche, wobei

    - die Referenz-Verteilung (210) Grenzwerte für die Sensorwerte (203) von Sensorpunkten (121, 122) anzeigt;
    - die Vorrichtung (130) eingerichtet ist, für jeden Sensorwert (203) aus der Ist-Verteilung (211) zu überprüfen, ob der jeweilige Sensorwert (203) den entsprechenden Grenzwert aus der Referenz-Verteilung (210) überschreitet oder nicht; und
    - die Vorrichtung (130) eingerichtet ist, in Abhängigkeit davon zu entscheiden, ob eine Neu-Initialisierung des Berührungssensors (110) durchzuführen ist oder nicht und/oder ob ein inkorrektes Berührungs-Ereignis oder ein korrektes Berührungs-Ereignis vorliegt.

7. Auswerte-Vorrichtung (130) gemäß Anspruch 6, wobei

    - die Referenz-Verteilung (210) experimentell im Vorfeld für den Berührungssensor (110) ermittelt wird; und/oder
    - die Referenz-Verteilung (210) derart ist, dass der Grenzwert mit steigendem Abstand zu dem zentralen Sensorpunkt (122) abnimmt; und/oder
    - die Grenzwerte der Referenz-Verteilung (210) von dem maximalen Sensorwert (201) abhängen.

8. Auswerte-Vorrichtung (130) gemäß einem der vorhergehenden Ansprüche, wobei die Vorrichtung (130) eingerichtet ist, für das Berührungs-Ereignis,

    - in Abhängigkeit von dem Vergleich der Ist-Verteilung (211) mit der Referenz-Verteilung (210) zu entscheiden, ob es sich um ein inkorrektes Berührungs-Ereignis oder um ein korrektes Berührungs-Ereignis handelt; und
    - wenn entschieden wird, dass es sich um ein inkorrektes Berührungs-Ereignis handelt, für einen Überwachungszeitraum ab dem erkannten inkorrekten Berührungs-Ereignis zu überprüfen, ob nachfolgend zu dem erkannten inkorrekten Berührungs-Ereignis ein korrektes Berührungs-Ereignis detektiert wird; und
- in Abhängigkeit davon, eine Neu-Initialisierung des Berührungssensors (110) durchzuführen.

9. Auswerte-Vorrichtung (130) gemäß Anspruch 8, wobei die Vorrichtung (130) eingerichtet ist, eine Neu-Initialisierung des Berührungssensors (110) durchzuführen, wenn innerhalb des Überwachungszeitraums ab dem erkannten inkorrekten Berührungs-Ereignis kein korrektes Berührungs-Ereignis detektiert wird.

10. Auswerte-Vorrichtung (130) gemäß einem der vorhergehenden Ansprüche, wobei die Vorrichtung (130) eingerichtet ist, im Rahmen der Neu-Initialisierung des Berührungssensors (110) die Basiswerte für die Teilmenge von Sensorpunkten (121, 122) derart zu aktualisieren, dass der aktualisierte Basiswert eines Sensorpunktes (121, 122) dem Messwert des Sensorpunktes (121, 122) entspricht, wenn kein Berührungs-Ereignis vorliegt.

11. Auswerte-Vorrichtung (130) gemäß einem der vorhergehenden Ansprüche, wobei

- der Berührungssensor (110) ein zweidimensionaler Berührungssensor (110) ist; und/oder
- die Mehrzahl von Sensorpunkten (121, 122) eine Backgammon-artige Anordnung aufweist.

12. Auswerte-Vorrichtung (130) gemäß einem der vorhergehenden Ansprüche, wobei die Vorrichtung (130) eingerichtet ist,

- wiederholt, insbesondere periodisch mit einer bestimmten Abtastfrequenz, an einer Sequenz von Zeitpunkten jeweils Sensorwerte (203) der Mehrzahl von Sensorpunkten (121, 122) zu ermitteln;
- auf Basis der Sensorwerte (203) der Mehrzahl von Sensorpunkten (121, 122) an einem Zeitpunkt aus der Sequenz von Zeitpunkten zu entscheiden, ob ein Berührungs-Ereignis vorliegt, und bei Vorliegen eines Berührungs-Ereignisses eine Teilmenge aus der Mehrzahl von Sensorpunkten (121, 122) zu ermitteln, an der das Berührungs-Ereignis erfolgt ist; und
- die Ist-Verteilung (211) der Sensorwerte (203) für die ermittelte Teilmenge von Sensorpunkten (121, 122) zu ermitteln.

13. Hausgerät (110), das eine Benutzerschnittstelle mit einem Berührungssensor (110) und einer Auswerte-Vorrichtung (130) gemäß einem der vorhergehenden Ansprüche umfasst.

14. Verfahren (300) zum Betrieb eines Berührungssensors (110), der eine Mehrzahl von Sensorpunkten (121, 122) umfasst; wobei ein Sensorpunkt (121, 122) jeweils eingerichtet ist, einen Messwert zu erfassen, und ausgebildet ist, als Sensorwert (203) den um einen Sensorpunkt-spezifischen Basiswert korrigierten Messwert bereitzustellen; wobei das Verfahren (300) umfasst, für ein Berührungs-Ereignis

- Ermitteln von Sensorwerten (203) von zumindest einer Teilmenge der Mehrzahl von Sensorpunkten (121, 122);
- Identifizieren, auf Basis der Sensorwerte (203), eines zentralen Sensorpunktes (122) aus der Teilmenge von Sensorpunkten (121, 122), der einen maximalen Sensorwert (201) aufweist;
- Ermitteln (301) einer Ist-Verteilung (211) von Sensorwerten (203) der Teilmenge von Sensorpunkten (121, 122); wobei die Ist-Verteilung (211) die Sensorwerte (203) der Teilmenge von Sensorpunkten (121, 122) als Funktion eines Abstands (202) des jeweiligen Sensorpunktes (121, 122) von dem zentralen Sensorpunkt (122) anzeigt;
- Vergleichen (302) der Ist-Verteilung (211) mit einer Referenz-Verteilung (210); wobei die Referenz-Verteilung (210) Referenz- und/oder Grenzwerte für die Sensorwerte (203) von Sensorpunkten (121, 122) als Funktion des Abstands (202) des jeweiligen Sensorpunktes (121, 122) von dem zentralen Sensorpunkt (122) anzeigt; und
- in Abhängigkeit von dem Vergleich, Durchführen (303) einer Neu-Initialisierung des Berührungssensors (110), um den Berührungssensor (110) an einen neuen Zustand einer Bedienoberfläche des Berührungssensors (110) anzupassen; wobei im Rahmen der Neu-Initialisierung des Berührungssensors (110) die Basiswerte der Teilmenge von Sensorpunkten (121, 122) aktualisiert werden.

## Claims

1. Evaluation apparatus (130) for a touch sensor (110) with a plurality of sensor points (121, 122); wherein a sensor point (121, 122) is configured in each case to acquire a measurement value, and is designed to provide a measurement value corrected by a sensor point-specific base value as sensor value (203); wherein the apparatus (130) is configured, for a touch event,

- to ascertain sensor values (203) from at least a subset of the plurality of sensor points (121, 122);
- based on the sensor values (203), to identify a central sensor point (122) from the subset of sensor points (121, 122) which has a maximum sensor value (201);
- to ascertain an actual distribution (211) of sensor values (203) of the subset of sensor points (121, 122); wherein the actual distribution (211) indicates the sensor values (203) of the subset of sensor points (121, 122) as a function of a distance (202) of the respective sensor point (121, 122) from the central sensor point (122);
- to compare the actual distribution (211) with a reference distribution (210); wherein the reference distribution (210) indicates reference and/or limit values for the sensor values (203) of sensor points (121, 122) as a function of the distance (202) of the respective sensor point (121, 122) from the central sensor point (122); and
- depending on the comparison, to perform a reinitialisation of the touch sensor (110) in order to adjust the touch sensor (110) to a new state of a user interface of the touch sensor (110); wherein, within the scope of the reinitialisation of the touch sensor (110), the base values of the subset of sensor points (121, 122) are updated.

2. Evaluation apparatus (130) according to claim 1, wherein the apparatus (130) is configured, for the touch event, to ascertain the reference distribution (210) depending on the maximum sensor value (201), in particular to scale it depending on the maximum sensor value (201).

3. Evaluation apparatus (130) according to claim 2, wherein the apparatus (130) is configured, for the touch event,

- to compare a sensor value (203) of the actual distribution (203) with a corresponding reference and/or limit value of the reference distribution (210); and
- depending thereon, to decide whether or not a reinitialisation of the touch sensor (110) is to be performed.

4. Evaluation apparatus (130) according to one of the preceding claims, wherein the apparatus (130) is configured, for the touch event,

- to ascertain a value of a distance measure between the actual distribution (211) and the reference distribution (210); and
- depending on the value of the distance measure, to decide whether or not a reinitialisation of the touch sensor (110) is to be performed and/or whether an incorrect touch event or a correct touch event is present.

5. Evaluation apparatus (130) according to claim 4, wherein

- the reference distribution (210) indicates limit values for the sensor values (203) of sensor points (121, 122); and
- the value of the distance measure depends on whether the sensor value (203) of a sensor point (121, 122) exceeds or does not exceed the limit value indicated by the reference distribution (210).

6. Evaluation apparatus (130) according to one of the preceding claims, wherein

- the reference distribution (210) indicates limit values for the sensor values (203) of sensor points (121, 122);
- the apparatus (130) is configured to check, for each sensor value (203) from the actual distribution (211), whether the respective sensor value (203) exceeds or does not exceed the corresponding limit value from the reference distribution (210); and
- depending thereon, the apparatus (130) is configured to decide whether or not a reinitialisation of the touch sensor (110) is to be performed and/or whether an incorrect touch event or a correct touch event is present.

7. Evaluation apparatus (130) according to claim 6, wherein

- the reference distribution (210) for the touch sensor (110) is ascertained experimentally in advance; and/or
- the reference distribution (210) is such that the limit value decreases with increasing distance from the central sensor point (122); and/or
- the limit values of the reference distribution (210) depend on the maximum sensor value (201).

8. Evaluation apparatus (130) according to one of the preceding claims, wherein the apparatus (130) is configured, for the touch event,

- depending on the comparison of the actual distribution (211) with the reference distribution (210), to decide whether the touch event is an incorrect touch event or a correct touch event; and
- if it is decided that the touch event is an incorrect touch event, to check for a monitoring period starting from the identified incorrect touch event whether a correct touch event is detected following the identified incorrect touch event; and
- depending thereon, to perform a reinitialisation of the touch sensor (110).

9. Evaluation apparatus (130) according to claim 8, wherein the apparatus (130) is configured to perform a reinitialisation of the touch sensor (110) if a correct touch event is not detected during the monitoring period starting from the identified incorrect touch event.

10. Evaluation apparatus (130) according to one of the preceding claims, wherein the apparatus (130) is configured, within the scope of the reinitialisation of the touch sensor (110), to update the base values for the subset of sensor points (121, 122) such that the updated base value of a sensor point (121, 122) corresponds to the measurement value of the sensor point (121, 122) when no touch event is present.

11. Evaluation apparatus (130) according to one of the preceding claims, wherein

- the touch sensor (110) is a two-dimensional touch sensor (110); and/or
- the plurality of sensor points (121, 122) has a backgammon-like arrangement.

12. Evaluation apparatus (130) according to one of the preceding claims, wherein the apparatus (130) is configured

- to ascertain repeatedly, in particular periodically with a specific sampling frequency at a sequence of time instants, sensor values (203) of the plurality of sensor points (121, 122) in each case;
- to decide, on the basis of the sensor values (203) of the plurality of sensor points (121, 122) at a time instant from the sequence of time instants, whether a touch event is present, and if a touch event is present, to ascertain a subset from the plurality of sensor points (121, 122) at which the touch event occurred; and
- to ascertain the actual distribution (211) of the sensor values (203) for the ascertained subset of sensor points (121, 122).

13. Household appliance (110) which comprises a user interface with a touch sensor (110) and an evaluation apparatus (130) according to one of the preceding claims.

14. Method for operating a touch sensor (110), which comprises a plurality of sensor points (121, 122); wherein a sensor point (121, 122) is configured in each case to acquire a measurement value, and is designed to provide a measurement value corrected by a sensor-specific base value as sensor value (203); wherein the method (300) comprises, for a touch event,

- ascertaining sensor values (203) from at least a subset of the plurality of sensor points (121, 122);
- based on the sensor values (203), identifying a central sensor point (122) from the subset of sensor points (121, 122) which has a maximum sensor value (201);
- ascertaining (301) an actual distribution (211) of sensor values (203) of the subset of sensor points (121, 122); wherein the actual distribution (211) indicates the sensor values (203) of the subset of sensor points (121, 122) as a function of a distance (202) of the respective sensor point (121, 122) from the central sensor point (122);
- comparing (302) the actual distribution (211) with a reference distribution (210); wherein the reference distribution (210) indicates reference and/or limit values for the sensor values (203) of sensor points (121, 122) as a function of the distance (202) of the respective sensor point (121, 122) from the central sensor point (122); and
- depending on the comparison, performing (303) a reinitialisation of the touch sensor (110) in order to adjust the touch sensor (110) to a new state of a user interface of the touch sensor (110); wherein, within the scope of the reinitialisation of the touch sensor (110), the base values of the subset of sensor points (121, 122) are updated.

**Revendications**

1. Dispositif d'évaluation (130) pour un capteur tactile (110) comprenant une pluralité de points de détection (121, 122), chaque point de détection (121, 122) étant configuré pour acquérir une valeur de mesure et étant conçu pour fournir, à titre de valeur de détection (203), la valeur de mesure corrigée d'une valeur de base spécifique au point de détection, dans lequel le dispositif (130) est configuré, lors d'un évènement tactile, pour :

- déterminer des valeurs de détection (203) d'au moins un sous-ensemble de la pluralité des points de détection (121, 122),
- identifier, sur la base des valeurs de détection (203), un point de détection central (122) parmi le sous-ensemble des points de détection (121, 122) qui présente une valeur de détection maximale (201),
- déterminer une répartition réelle (211) des valeurs de détection (203) du sous-ensemble de points de détection (121, 122), la répartition réelle (211) représentant les valeurs de détection (203) du sous-ensemble des points de détection (121, 122) en fonction d'un espacement (202) entre le point de détection respectif (121, 122) et le point de détection central (122),
- comparer la répartition réelle (211) à une répartition de référence (210), la répartition de référence (210) représentant des valeurs de référence et/ou des valeurs limites pour les valeurs de détection (203) des points de détection (121, 122) en fonction d'un espacement (202) entre le point de détection respectif (121, 122) et le point de détection central (122), et
- effectuer, en fonction de la comparaison, une réinitialisation du capteur tactile (110), de manière à adapter le capteur tactile (110) à un nouvel état d'une surface de commande du capteur tactile (110), les valeurs de base du sous-ensemble de points de détection (121, 122) étant actualisées lors de la réinitialisation du capteur tactile (110).

2. Dispositif d'évaluation (130) selon la revendication 1, dans lequel le dispositif (130) est configuré pour déterminer, lors de l'évènement tactile, la répartition de référence (210) en fonction de la valeur de détection maximale (201), en particulier pour l'adapter en fonction de la valeur de détection maximale (201).

3. Dispositif d'évaluation (130) selon la revendication 2, dans lequel le dispositif (130) est configuré, lors de l'évènement tactile, pour

- comparer une valeur de détection (203) de la répartition réelle (203) avec une valeur de référence et/ou une valeur limite correspondante de la répartition de référence (210), et
- décider sur la base de cette comparaison s'il convient d'effectuer une réinitialisation du capteur tactile (110).

4. Dispositif d'évaluation (130) selon l'une des revendications précédentes, dans lequel le dispositif (130) est configuré, lors de l'évènement tactile, pour :

- déterminer une valeur d'une mesure d'écart entre la répartition réelle (211) et la répartition de référence (210), et
- déterminer, en fonction de la valeur de la mesure d'écart, si une réinitialisation du capteur tactile (110) doit être exécutée ou non, et/ou si un évènement tactile erroné ou un évènement tactile valide est présent.

5. Dispositif d'évaluation (130) selon la revendication 4, dans lequel :

- la répartition de référence (210) définit des valeurs limites pour les valeurs de détection (203) des points de détection (121, 122), et
- la valeur de la mesure d'écart dépend du fait qu'une valeur de détection (203) d'un point de détection (121, 122) dépasse ou non la valeur limite définie par la répartition de référence (210).

6. Dispositif d'évaluation (130) selon l'une des revendications précédentes, dans lequel

- la répartition de référence (210) indique des valeurs limites pour les valeurs de détection (203) des points de détection (121, 122),
- le dispositif (130) est configuré pour vérifier, pour chaque valeur de détection (203) de la répartition réelle (211), si la valeur de détection respective (203) ne dépasse pas la valeur limite correspondante de la répartition de référence (210), et
- le dispositif (130) est configuré pour déterminer, en fonction de la vérification, si une réinitialisation du capteur tactile (110) doit être exécutée ou non et/ou si un évènement tactile erroné ou un évènement tactile valide est présent.

7. Dispositif d'évaluation (130) selon la revendication 6, dans lequel :

- la répartition de référence (210) est déterminée expérimentalement au préalable pour le capteur tactile (110), et/ou

- la répartition de référence (210) est définie de sorte que la valeur limite diminue à mesure que l'espacement par rapport au point de détection central (122) augmente, et/ou

- les valeurs limites de la répartition de référence (210) sont fonction de la valeur de détection maximale (201).

8. Dispositif d'évaluation (130) selon l'une des revendications précédentes, dans lequel le dispositif (130) est configuré, lors de l'évènement tactile, pour :

- déterminer en fonction de la comparaison de la répartition réelle (211) avec la répartition de référence (210), s'il s'agit d'un évènement tactile erroné ou d'un évènement tactile valide, et

- dans le cas où il est déterminé qu'il s'agit d'un évènement tactile erroné, vérifier pendant une période de surveillance à compter de l'identification de l'évènement tactile erroné si un évènement tactile valide est détecté après l'évènement tactile erroné, et

- en fonction de cette vérification, effectuer une réinitialisation du capteur tactile (110).

9. Dispositif d'évaluation (130) selon la revendication 8, dans lequel le dispositif (130) est configuré pour exécuter une réinitialisation du capteur tactile (110) dans le cas où aucun évènement tactile valide n'est détecté au cours de la période de surveillance à compter de l'évènement tactile erroné identifié.

10. Dispositif d'évaluation (130) selon l'une des revendications précédentes, dans lequel le dispositif (130) est configuré pour actualiser les valeurs de base du sous-ensemble des points de détection (121, 122) lors de la réinitialisation du capteur tactile (110), de sorte que la valeur de base actualisée d'un point de détection (121, 122) corresponde à la valeur de mesure du point de détection (121, 122) en l'absence de tout évènement tactile.

11. Dispositif d'évaluation (130) selon l'une des revendications précédentes, dans lequel :

- le capteur tactile (110) est un capteur tactile bidimensionnel (110), et/ou

- la pluralité des points de détection (121, 122) sont agencés selon un motif de type backgammon.

12. Dispositif d'évaluation (130) selon l'une des revendications précédentes, dans lequel le dispositif (130) est configuré pour :

- déterminer respectivement des valeurs de détection (203) de la pluralité des points de détection (121, 122) de manière régulière à une succession d'instants, en particulier de façon périodique à une fréquence d'échantillonnage prédéfinie,

- sur la base des valeurs de détection (203) de la pluralité des points de détection (121, 122), déterminer à un instant de la succession d'instants si un évènement tactile est présent et, lorsqu'un évènement tactile est présent, déterminer un sous-ensemble parmi la pluralité des points de détection (121, 122) sur lequel l'évènement tactile est effectué, et

- déterminer la répartition réelle (211) des valeurs de détection (203) pour le sous-ensemble déterminé des points de détection (121, 122).

13. Appareil électroménager (110), qui comprend une interface utilisateur comprenant un capteur tactile (110) et un dispositif d'évaluation (130) selon l'une des revendications précédentes.

14. Procédé (300) de fonctionnement d'un capteur tactile (110), qui comprend une pluralité de points de détection (121, 122), chaque point de détection (121, 122) étant configuré pour acquérir une valeur de mesure et étant conçu pour fournir, à titre de valeur de détection (203), la valeur de mesure corrigée d'une valeur de base spécifique au point de détection, le procédé (300) comprenant, lors d'un évènement tactile :

- la détermination de valeurs de détection (203) d'au moins un sous-ensemble de la pluralité des points de détection (121, 122),

- l'identification, sur la base des valeurs de détection (203), d'un point de détection central (122) parmi le sous-ensemble des points de détection (121, 122) qui présente une valeur de détection maximale (201),

- la détermination (301) d'une répartition réelle (211) des valeurs de détection (203) du sous-ensemble de points de détection (121, 122), la répartition réelle (211) représentant les valeurs de détection (203) du sous-ensemble des points de détection (121, 122) en fonction d'un espacement (202) entre le point de détection respectif (121, 122) et le point de détection central (122),

- la comparaison (302) de la répartition réelle (211) à une répartition de référence (210), la répartition de référence (210) représentant des valeurs de référence et/ou des valeurs limites pour les valeurs de détection (203) des points de détection (121, 122) en fonction d'un espacement (202) entre le point de détection respectif (121, 122) et le point de détection central (122), et

- l'exécution (303), en fonction de la comparaison, d'une réinitialisation du capteur tactile (110), de manière à adapter le capteur tactile (110) à un nouvel état d'une surface de commande du capteur tactile (110), les valeurs de base du sous-ensemble de points de détection (121, 122) étant actualisées lors de la réinitialisation du capteur tactile (110).

**Fig. 1a**

**Fig. 1b**

**Fig. 2a**

**Fig. 2b**

Ermitteln einer Ist-Sensorwert-Verteilung für ein Berührungs-Ereignis — 301

Vergleichen der Ist-Sensorwert-Verteilung mit einer Referenz-Verteilung — 302

Kalibrieren des Berührungssensors in Abhängigkeit von dem Vergleich — 303

**Fig. 3**

**IN DER BESCHREIBUNG AUFGEFÜHRTE DOKUMENTE**

**In der Beschreibung aufgeführte Patentdokumente**

- US 20160092022 A1
- US 20160209963 A1
- EP 3082025 A1
- KR 20190104101 A